(19) **Europäisches Patentamt / European Patent Office / Office européen des brevets**

(11) **EP 3 609 069 B1**

(12) **EUROPEAN PATENT SPECIFICATION**

(45) Date of publication and mention
of the grant of the patent:
**12.01.2022 Bulletin 2022/02**

(51) Int Cl.:
**H02M 7/483** *(2007.01)* **G01R 19/00** *(2006.01)*
**H02M 1/00** *(2006.01)*

(21) Application number: **18187589.9**

(22) Date of filing: **06.08.2018**

(54) **CONVERTER SYSTEM**

WANDLERSYSTEM

SYSTÈME DE CONVERTISSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.02.2020 Bulletin 2020/07**

(73) Proprietor: **General Electric Technology GmbH
5400 Baden (CH)**

(72) Inventor: **OUTRAM, John Lewis
Stafford, Staffordshire ST16 1WS (GB)**

(74) Representative: **Brevalex
95, rue d'Amsterdam
75378 Paris Cedex 8 (FR)**

(56) References cited:
**CN-A- 105 911 327     JP-A- 2014 233 168**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a converter system, and in particular to a converter such as a power converter. One example such converter is a Modular Multilevel Converter (MMC).

HVDC (High-Voltage Direct Current) electrical power transmission uses direct current for the transmission of electrical power. This is an alternative to alternating current electrical power transmission. There are a number of known benefits to using HVDC electrical power transmission.

In order to use HVDC electrical power transmission, it is typically necessary to convert alternating current (AC) to direct current (DC) and back again. In the power electronics field, voltage-source converters (VSC) are often used for AC-DC conversion (rectification) and/or DC-AC conversion (inversion).

VSCs typically comprise six converter limbs (for a three phase AC input/output), each of which connects one DC terminal to one AC terminal to define a current path between those terminals. The converter limbs may be referred to as converter arms, with each pair of converter arms (corresponding to a given phase) being referred to as a converter leg. Each arm comprises an apparatus which is termed a valve and which typically comprises a plurality of sub-modules which may be switched in a desired sequence. In a Modular Multilevel Converter (MMC), being one example type of VSC, each sub-module typically comprises a capacitor as an energy storage device and switching units for selectively connecting the capacitor in series between the terminals of the sub-module or bypassing the capacitor. In use, the sub-modules are controlled in a sequence to progressively vary the number of energy storage elements which are connected in series in a converter limb so as to provide multilevel voltage shifting between the voltages at the corresponding AC and DC terminals.

Other converter topologies exist, as mentioned later herein, which may also employ such an apparatus comprising a plurality of sub-modules which may be switched in a desired sequence. The present disclosure will be understood accordingly.

For control of such a converter it can be advantageous to monitor the voltages of the capacitors of the sub-modules and control the switching of the sub-modules based on the monitored voltages. It can also be advantageous to monitor a direction of current flow along the converter limbs, i.e. along a current path of those converter limbs.

Knowing the current direction is useful in e.g. MMC sorting algorithms to ensure that the many capacitor voltages stay balanced. For example, when the current direction is suitable for charging the capacitors, sub-modules whose capacitors have relatively low voltages can be used to help charge up those capacitors. Conversely, when the current direction is suitable for discharging the capacitors, sub-modules whose capacitors have relatively high voltages can be used to help discharge those capacitors. It can accordingly be appreciated that operating such algorithms when the current direction is not correctly known may lead to the capacitor voltages undesirably diverging. Current direction is also useful for dead band compensation, without which some voltage distortion may result. Dead band compensation is considered in more detail later herein.

The current direction is currently commonly derived from a current sensor monitoring the valve current. As this sensor typically has a range of a few thousand Amperes, the determination of current direction at low currents (e.g. less than 10 A) is typically unreliable, being subject to noise and offsets. This unreliable determination of current direction can accordingly impact e.g. MMC sorting algorithms and dead band compensation. Circulating a current of at least e.g. 10 A peak, at zero load, in order to avoid such problems is undesirable in terms of no-load losses.

It is desirable to address some or all of the above problems. It is desirable to reduce the significant no-load losses suffered in order to operate acceptable capacitor voltage balancing and/or do dead band compensation.

According to a first aspect of the present disclosure, as set forth in claim 1, there is provided a converter having at least one converter apparatus defining a current path within the converter, the converter comprising: a plurality of sub-modules connectable in series to form at least part of the converter apparatus such that current flowing along the current path flows through each of those sub-modules, each sub-module comprising an energy storage device and switching circuitry configured to direct the flowing current so that it either flows through or bypasses the energy storage device, the switching circuitry controllable to cause the sub-module to transition between at least one pair of different configurations via a corresponding intermediate configuration applied in order to avoid switches of the switching circuitry being on at the same time and shorting out the energy storage device, that transition affecting a potential difference such that it exhibits an associated change either when the sub-module is in the intermediate configuration concerned or after it has exited that intermediate configuration dependent on a direction of current flow along the current path for that transition; and a controller configured to carry out a direction-determination operation in respect of at least one said sub-module, the direction-determination operation determining the direction of current flow along the current path for a said transition of that sub-module by measuring the time taken for the associated change in potential difference to occur and by measuring the affected potential difference concerned at least once over that transition to determine whether the associated change occurs when that sub-module is in the intermediate configuration concerned or after it has exited that intermediate configuration.

By virtue of such a system, it is possible to determine the direction of current flow along the current path based on a measured potential difference. Moreover, since there may be a marked difference in such measurements dependent on the direction of current flow along the current path, that direction may be readily determined (e.g. enabling use of low accuracy components in the measurement).

The converter may be referred to as a voltage source converter, or a modular multilevel converter, or a power electronic converter, or a power converter, or a chain-link converter.

The converter apparatus may form part or all of a converter limb (or current path portion of the converter), or part or all of a converter valve. The converter apparatus or converter limb may connect an AC terminal to a DC terminal of the converter, or form part of a current path between an AC terminal and a DC terminal of the converter, e.g. where the converter is engaged in AC-DC conversion. In another arrangement, the converter apparatus or converter limb may connect two DC terminals together, or form part of a current path between such DC terminals, for example where the converter is engaged in the removal of excess energy from DC power transmission lines e.g. in the event of circumstances such as a fault. In another arrangement, the converter apparatus or converter limb may connect two AC terminals together, or form part of a current path between such AC terminals.

Such a converter limb may be referred to as a converter arm in some arrangements. The sub-modules may be half-bridge or full-bridge sub-modules, or other types of sub-modules. The affected potential difference (voltage) may be measured more than once over the transition, with the corresponding multiple measurements being taken into account in the direction determination. The particular potential difference measured may differ from sub-module to sub-module, or depending on the transition concerned.

The controller may be configured, in said direction-determination operation, to measure the affected potential difference when the sub-module concerned is in the intermediate configuration of the transition concerned, and to determine the direction of current flow along the current path for that transition based (e.g. only) on that potential-difference measurement.

In this way, it may be that the direction of current flow along the current path is determined based on such a single measurement, which is advantageous in terms of complexity of the direction-determination operation.

The controller may be configured, in said direction-determination operation, to measure the affected potential difference just before the sub-module concerned exits the intermediate configuration as it transitions between the pair of configurations concerned. That is, the affected potential difference may be measured when the sub-module concerned is in the intermediate configuration and in the latter 50%, or 25% or 10% or 5% of the time period (i.e. late enough for the associated change to have occurred given the relevant current direction) when the sub-module concerned is in the intermediate configuration.

The controller may be configured, in said direction-determination operation, to determine the direction of current flow based on the magnitude and/or polarity (positive or negative) of the measured potential difference.

The controller may be configured, in said direction-determination operation, to determine that the current flow: has a first direction (e.g. DC to AC terminal) if the measured potential difference is larger than a threshold potential difference and has a second direction (e.g. AC to DC terminal) opposite to the first direction if the measured potential difference is smaller than the threshold potential difference; and/or has the first direction if the measured potential difference has a positive polarity and has the second direction if the measured potential difference has a negative polarity.

The controller may be configured, in said direction-determination operation, to determine the current flow along the current path by comparing the potential difference measured when the sub-module concerned is in the intermediate configuration of the transition concerned with a corresponding measurement taken in one of the pair of configurations of that transition. Such a comparison may help indicate whether the measurements taken seem reasonable (i.e. to rule out device error), and also help identify whether a significant change in the potential difference has occurred.

The controller may be configured, in said direction-determination operation, to measure the affected potential difference when the sub-module concerned is in the intermediate configuration and when (after) it exits the intermediate configuration of that transition, and to determine the direction of current flow along the current path for the transition concerned based on those potential-difference measurements.

The controller may be configured, in said direction-determination operation, to measure the time taken (e.g. from the beginning of the transition concerned) for the associated change in potential difference to occur, and to determine the direction of current flow along the current path based on the measured time taken.

The controller may be configured, in said direction-determination operation, to determine that the current flow has a first direction if the measured time taken is larger than a threshold time period and has a second direction opposite to the first direction if the measured time taken is smaller than the threshold time period.

The threshold time period for said direction-determination operation may be the time period over which the sub-module concerned is in the intermediate configuration of the transition concerned.

The affected potential difference may be, or be indicative of, a potential difference across the sub-module concerned. The affected potential difference may be, or be indicative of, a potential difference across one or more components of the sub-module concerned, or across one or more sub-modules of the converter apparatus (or even converter limb) concerned.

The controller or the sub-module concerned may comprise a voltage measuring unit configured to measure the affected potential difference.

The controller may be configured to determine the direction of current flow differently for different pairs of configurations.

The controller may be configured to carry out a said direction-determination operation in respect of the least one said sub-module each time it transitions between a said pair of configurations. The controller may be configured to carry out a said direction-determination operation in respect of each of said sub-modules. The controller may be configured to carry out a said direction-determination operation in respect of each of said sub-modules, each time they transition between a said pair of configurations.

The controller may be operable to control at least one or each of the sub-modules to cause them to transition between a said pair of configurations.

The controller may be operable to control when at least one or each of the sub-modules transitions between a said pair of configurations in order to control a voltage waveform formed by a potential difference between terminals of the converter apparatus (e.g. between AC and DC terminals of a corresponding converter limb).

The controller may be configured to control the timing of each said transition based on at least one determined said direction of current flow so that said voltage waveform matches a target waveform. The controller may be configured to control the timing of successive said transitions each based on a most recent said determined direction of current flow. The controller may be configured to control which sub-modules transition based on at least one determined said direction of current flow so that potential differences across the energy storage devices tend towards a common potential difference. The controller may be configured to control which sub-modules transition in successive said transitions each based on a most recent said determined direction of current flow. The controller may be configured to control the transitions of one or more said sub-modules based on at least one said direction of current flow determined based on a said potential difference measured in respect of another said sub-module.

The switching circuitry may comprise unidirectional current devices, such as diodes.

The switching circuitry may comprise a plurality of switching units, each comprising a switch arranged with an antiparallel unidirectional current device. In that case, the controller may be configured to control which said switches are on and off so as to configure the sub-module selectively into the configurations concerned.

At least one said sub-module may be a half-bridge sub-module comprising a series arrangement of first and second said switching units connected in parallel with the energy storage device. For each half-bridge sub-module, the controller may be configured to control its first and second switches respectively to be on and off in one of the pair of configurations concerned, off and off in the corresponding intermediate configuration, and off and on in the other of that pair of configurations.

At least one said sub-module may be a full-bridge sub-module comprising a first series arrangement of first and second said switching units connected in parallel with the energy storage device, and a second series arrangement of third and fourth said switching units also connected in parallel with the energy storage device. Each said switch may comprise a turn-off semiconductor, optionally an insulated-gate bipolar transistor. Each said antiparallel unidirectional current device may comprise a diode. Each said energy storage device may comprise a capacitor.

For each said transition, the associated change in the affected potential difference concerned may be equal to the difference between that potential difference prior to entering the intermediate configuration concerned and that potential difference once settled after exiting that intermediate configuration.

For each said pair of configurations,: one of that pair of configurations may cause the current to pass through the energy storage device concerned, the other of that pair of configurations may cause the current to either pass through or bypass the energy storage device concerned, and the corresponding intermediate configuration may cause the current to flow through the sub-module concerned as in one or the other of that pair of configurations dependent on the direction of current flow along the current path.

According to another aspect of the present disclosure, as set forth in claim 13, there is provided a method of controlling a converter having at least one converter apparatus defining a current path within the converter, the converter comprising a plurality of sub-modules connectable in series to form at least part of the converter apparatus such that current flowing along the current path flows through each of those sub-modules, each sub-module comprising an energy storage device and switching circuitry configured to direct the flowing current so that it either flows through or bypasses the energy storage device, the switching circuitry controllable to cause the sub-module to transition between at least one pair of different configurations via a corresponding intermediate configuration, that transition affecting a potential difference such that it exhibits an associated change either when the sub-module is in the intermediate configuration concerned or after it has exited that intermediate configuration dependent on a direction of current flow along the current path for that transition.

The method comprises carrying out a direction-determination operation in respect of at least one said sub-module, the direction-determination operation determining the direction of current flow along the current path for a said transition of that sub-module based on the timing of a voltage waveform formed by the affected potential difference concerned relative to switching commands provided to control the switching circuitry concerned for that transition. It will be appreciated that the control of the switching circuitry may be by switching commands which cause the sub-module concerned to adopt corresponding said configurations. The timing of those switching commands may control or govern the timing in which the configurations of the transition are adopted. The current direction may effectively be inferred from the timing of the voltage waveform relative to the switching commands (e.g. IGBT switching commands). The present disclosure will be understood accordingly.

Reference will now be made, by way of example only, to the accompanying drawings, of which:

Figure 1 is a schematic diagram representative of a voltage source converter;
Figure 2 is a schematic diagram representative of a sub-module of Figure 1;
Figures 3a and 3b are example graphs of valve voltage and valve current;
Figure 4 is a schematic diagram useful for understanding the commutations in an example half-bridge sub-module;
Figure 5 presents graphs corresponding to the configurations (a) to (k) of Figure 4;
Figures 6a to 6e are schematic diagrams useful for understanding example sets of commutations in an example full-bridge sub-module;
Figure 7 is a schematic diagram of a control method embodying the present invention;
Figure 8 is a graph showing the number of sub-modules in a given valve in the output configuration over time; and
Figure 9 is graph which zooms in on a portion of the Figure 8 graph.

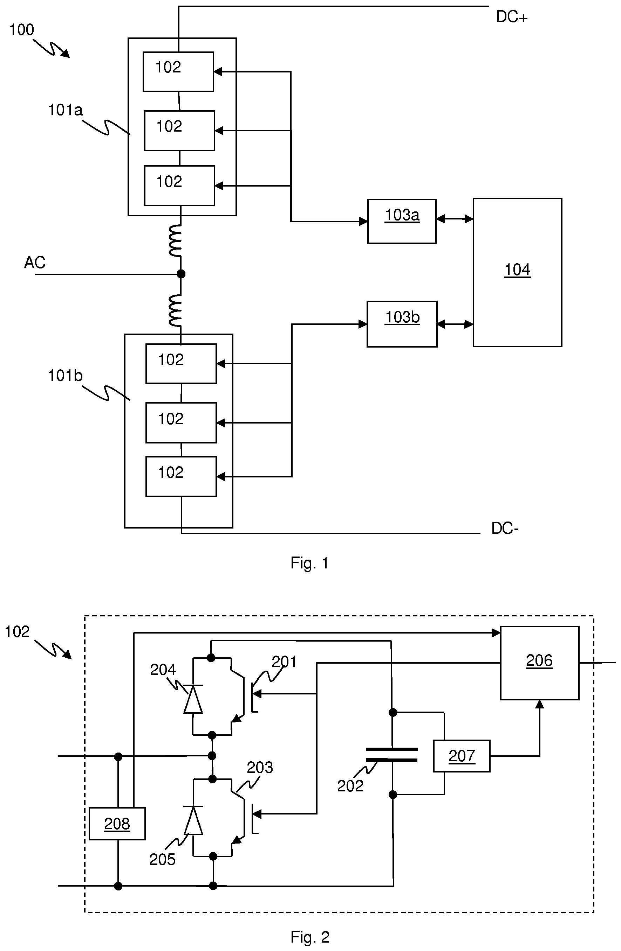

**Figure 1** is a schematic diagram representative of a voltage source converter (VSC) 100, in particular a modular multilevel converter (MMC), in which an embodiment of the present invention is implemented. The voltage source converter (VSC) 100 itself also embodies the present invention.

A first limb (or arm) of the converter has a valve 101a (converter apparatus) and a reactor (e.g. an inductor) connected between a positive DC terminal, DC+, and an AC terminal. A second limb includes a second valve 101b (converter apparatus) and a reactor (e.g. an inductor) connected between a negative DC terminal, DC-, and the AC terminal. The reactors could for example be provided on the DC-terminal side of the valves rather than on the AC-terminal side. It will be appreciated that part or all of a converter limb (comprising a valve) may be referred to as a converter apparatus.

Each of the valves 101a and 101b comprises a plurality of sub-modules 102 which are, or can be, connected in series. Figure 1 illustrates just three sub-modules 102 per valve 101a, 101b for simplicity but in practice there may be of the order of a few hundred sub-modules in each arm. For example MMCs have been proposed with of the order of 350 or more sub-modules in a valve. The sub-modules 102 may be grouped in one or more modules in each limb (which may be referred to as an arm).

Of course, other converter topologies exist, for example with their converter arms employing sections of MMC valve (corresponding to one of valves 101a and 101b) in combination with switches or resistors (e.g. for dynamic braking systems). It will be appreciated that the techniques disclosed herein apply equally to such topologies, and the present disclosure will be understood accordingly. Each converter apparatus may for example form part of larger current path along which current flows between an AC and DC terminal of a converter. As another example, a converter apparatus may for example form part of a larger current path between DC terminals, for example where the converter is engaged in the removal of excess energy from DC power transmission lines (such as by directing current via a resistance) e.g. in the event of circumstances such as a fault. The embodiments and teaching disclosed herein will be understood to be applicable to such other converter topologies *mutatis mutandis.*

For simplicity, Figure 1 illustrates the connections for converting between one AC waveform and DC or vice-versa, i.e. for converting to or from one phase of AC. For converting to/from three-phase AC there would be three AC terminals (one for each phase) and each AC terminal would be separately connected to the positive and negative DC terminals by two respective converter limbs or arms as shown, collectively referred to as a converter leg. Thus, for a VSC for converting to/from three phase AC there would be six converter arms in practice, arranged to form three converter legs (one leg per phase). The present disclosure will be understood accordingly to encompass such a three-phase VSC. It should also be noted that as used herein the terms positive DC and negative DC are defined with reference to a mid-point voltage and do not necessarily imply any particular polarity with respect to a ground reference.

The basic structure of a sub-module 102 is illustrated in **Figure 2.** A first switch 201, which typically comprises one or more insulated gate bipolar transistors (IGBT) or other turn-off semiconductors, is arranged in series with at least one energy storage device 202, which typically is a capacitor. The series connection of the first switch 201 and the energy storage device 202 extends between input/output terminals (i.e. current path terminals) of the sub-module. A second switch 203, which may also comprise one or more IGBTs, is coupled between the input/output terminals of the sub-module 102. Examples of other turn-off semiconductors (or self-commutated switching devices) include metal-oxide-semiconductor field-effect transistors (MOSFET), integrated gate-commutated thyristors (IGCT), gate turn-off thyristors (GTO), and injection-enhanced gate transistors (IEGT).

The first and second switches 201 and 203 are arranged in parallel with unidirectional current devices, such as diodes 204 and 205, respectively, as indicated. The first switch 201 and its antiparallel diode 204 may be referred to collectively as a first switching unit. Similarly, the second switch 203 and its antiparallel diode 205 may be referred to collectively as a second switching unit.

In operation, the sub-module 102 may be switched or transitioned between output and bypass configurations via an intermediate configuration. The output and bypass configurations constitute a pair of different configurations.

In the output configuration, the first switch 201 is switched on, i.e. the switch is closed, with the second switch 203 off, i.e. open, to connect the energy storage device 202 in series with the other sub-modules. In the output configuration the current path of the converter limb concerned passes between the input/output terminals of the sub-module and through the energy storage device 202. When the current passes through the energy storage device 202 the sub-module 102 concerned may be considered to be in an output state.

In the bypass configuration, the second switch 203 is switched on, with the first switch 201 off, to bypass the energy storage device 202. In the bypass configuration the current path of the converter limb concerned passes between the input/output terminals of the sub-module but bypasses the energy storage device 202. When the current bypasses the energy storage device 202 the sub-module 102 concerned may be considered to be in a bypass state.

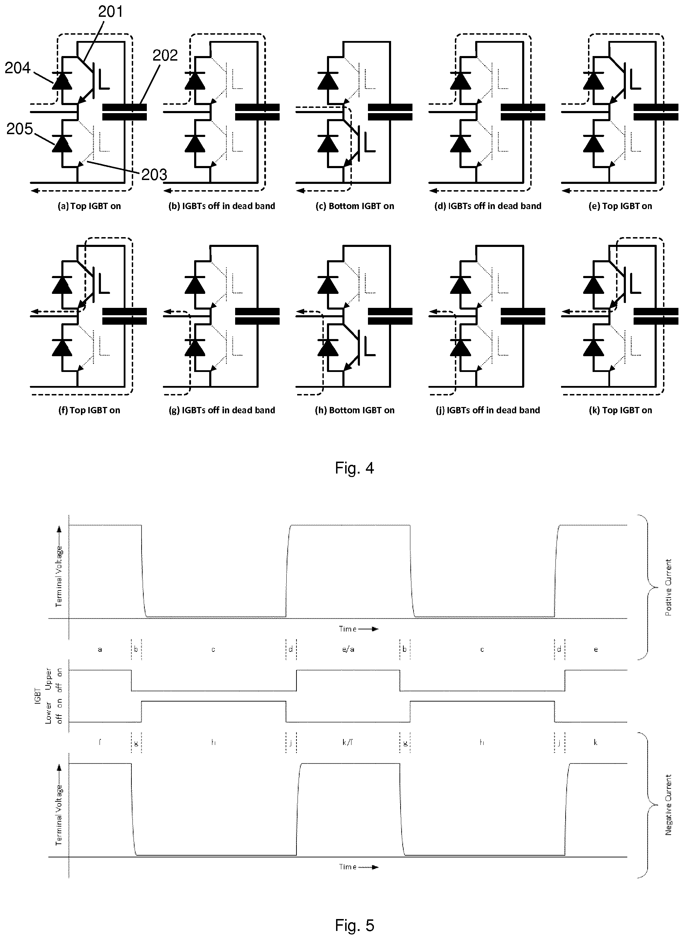

In the intermediate configuration, both of the first and second switches 201, 203 are switched off. Nevertheless, as will become clearer in connection with Figure 4 described later, in the intermediate configuration the current path of the converter limb concerned may pass through or bypass the energy storage device 202. Thus, the sub-module 102 concerned may be considered to be in the output or bypass state. Care is taken to transition between the output and bypass configurations via the intermediate configuration to avoid shoot through - i.e. to avoid both of the switches 201 and 203 being on at the same time and shorting out the energy storage device 202.

In use, a respective valve control unit 103a, 103b (shown in Figure 1) controls switching of the sub-modules of each of the first and second valves 101a, 101b. The valve control units 103a, 103b may themselves be controlled by, and in some embodiments may form part of, a central control unit 104 for the VSC 100.

By controlling the sequence of switching of the sub-modules to progressively vary the number of energy storage devices 202 which are connected in series in the converter limb concerned (i.e. so that the current path of that limb passes through those energy storage devices 202) the voltage difference across each valve can be stepped up and down in time with the AC voltage waveform to provide the desired power conversion.

Considering a three-phase VSC 100 in line with Figure 1, i.e. an MMC, it will be understood that current flows continuously in all six valves of the converter throughout the AC cycle. The direct current flowing between the DC terminals splits equally into the three phases and the alternating current splits equally into the upper and lower valve of each phase, for example between valves 101a and 101b for the representative phase shown in Figure 1.

The valve current Iv in each valve 101a, 101b of Figure 1 is therefore related to the direct current Idc and alternating current Iac, and may be expressed as follows assuming a three-phase VSC 100:

Upper valve 101a:

$$I_v = \frac{I_{dc}}{3} + \frac{I_{ac}}{2}$$

Lower valve 101b:

$$I_v = \frac{I_{dc}}{3} - \frac{I_{ac}}{2}$$

It will therefore be appreciated that depending on the relative sizes of the direct current Idc and alternating current Iac the actual direction of current in the valves may change over time. For example, the actual valve current may be considered an AC current with a DC offset.

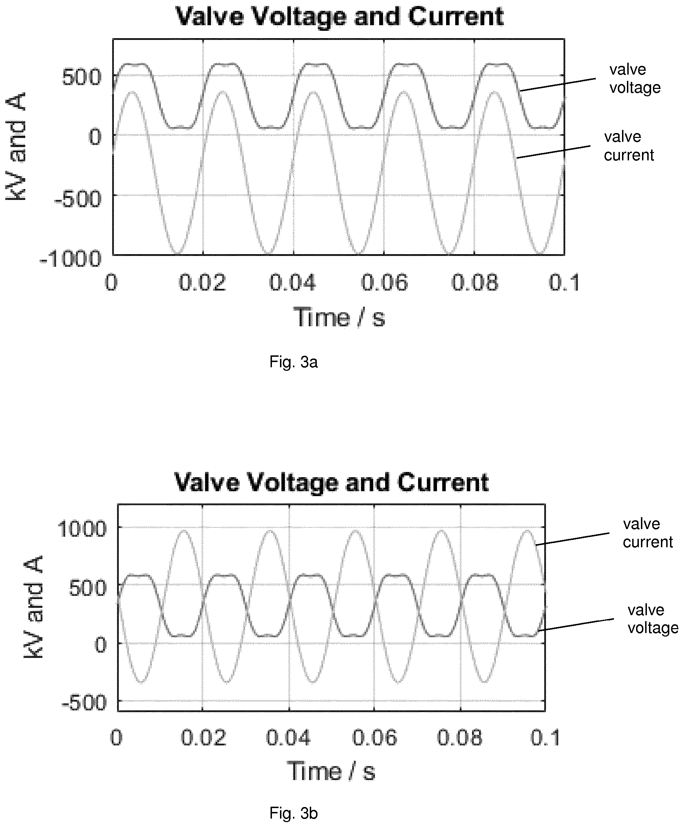

**Figures 3a and 3b** are example graphs of valve voltage (i.e. a potential difference across the valve) and valve current (i.e. a current flowing through the valve) useful for understanding the operation of the VSC 100. In each graph, the x-axis represents time in seconds, and the y-axis represents valve voltage in kV and valve current in A.

In the example, a single AC phase is considered for simplicity, in line with Figure 1. It is generally assumed that each converter limb (i.e. each valve) may contain 100 to 400 sub-modules 102 (in this example 240 - sufficient sub-modules are provided in the present example to leave margin to manage transient voltages and to include redundancy so operation can continue with up to a defined number of sub-module failures), with each sub-module 102 contributing 2 to 3 kV (in this example 2.8 kV) to the valve voltage, i.e. the voltage across the valve concerned. In each graph the peak-to-peak magnitude of the voltage waveform is around 620 kV and the peak-to-peak magnitude of the current waveform is around 1300 A (with the current direction changing over time).

Figure 3a represents the VSC 100 operating as a rectifier, i.e. converting from AC to DC. Here the valve voltage alternates between approximately 16 kV and 624 kV, and the valve current alternates between approximately +300 and -1000 A (with the positive current direction representing current flow that would charge the energy storage devices 202). Here the voltage waveform is approximately in phase with the current waveform, although this is just an example. In the present example, the DC voltage is nominally 640 kV but the AC amplitude does not fully utilise this in steady state to allow headroom for transients.

Figure 3b represents the VSC 100 operating as an inverter, i.e. converting from DC to AC. Here the valve voltage alternates between approximately 16 kV and 624 kV, and the valve current alternates between approximately +1000 and -300 A (with the positive current direction again representing current flow that would charge the energy storage devices 202). Here the voltage waveform is approximately out of phase with the current waveform, again just as an example. The phase relationship may be dependent on the reactive power in the system.

Returning to Figure 2 it will be appreciated that the illustrated sub-module 102 has two switching units arranged in a half-bridge arrangement. Other configurations of the sub-modules are possible, for instance a full-bridge arrangement with at least four switching units as considered in more detail later.

Typically each sub-module will have its own sub-module control unit 206 for controlling the sub-module in response to commands (e.g. switching commands - for controlling the switching of the switches 201, 203) from the valve control units 103a, 103b and/or central control unit 104.

To control the sub-modules 102 of the VSC 100, the storage device voltage (the potential difference across the energy storage device 202) of each sub-module 102 may be monitored by a voltage measuring unit 207, which may for example comprise a potential divider arrangement using precision resistors. Similarly, the sub-module voltage (the potential difference across the input/output terminals of each sub-module 102) may be monitored by a voltage measuring unit 208, which may also comprise a potential divider arrangement (potentially using precision resistors, although these may be unnecessary where the technique only requires a Boolean measurement). The measured voltages, or signals indicative of those voltages, may be provided as feedback signals to valve control unit 103a, 103b or central control unit 104, possibly via the sub-module control unit 206 as shown.

A combination of some or all of the valve control units 103a, 103b, the central control unit 104, the sub-module control units 206 and the voltage measuring units 207, 208 may be referred to as a controller.

The valve control unit 103a, 103b may therefore receive indications of these voltages from some or all of the sub-modules 102, from both of the valves 101a and 101b and use such voltage information to select which sub-modules 102 to enable (i.e. operate in the output configuration), for instance to ensure or improve voltage balancing of the energy storage devices 202, and when to enable those sub-modules, for instance to carry out dead band compensation.

In order to better understand the applicability of such feedback signals, reference will now be made to Figures 4 and 5.

**Figure 4** is a schematic diagram useful for understanding the commutations in an example sub-module 102, for example one of the sub-modules 102 (having a half-bridge arrangement) of the valve 101a. The example sub-module 102 is shown in ten configurations labelled (a) to (k), respectively. There is no configuration (i) shown. The reference numerals in configuration (a) show the correspondence between Figures 2 and 4, and have been omitted from the other configurations of Figure 4 for simplicity. Again, for simplicity, only the switching units and the energy storage device are shown in Figure 4.

In relation to Figure 4 the switches 201 and 202 will be referred to as IGBTs, the energy storage device 202 will be referred to as a capacitor, and the unidirectional current devices 204 and 205 will be referred to as diodes, as convenient examples. The dashed line represents the current path through the sub-module 102, and an IGBT is on when shown solid and off when shown in faint dotted form.

**Figure 5** presents graphs corresponding to the configurations (a) to (k) of Figure 4, and thus it is useful to consider Figures 4 and 5 together. Although not clearly shown in Figure 4, it is assumed that the example sub-module 102 commutates from configuration (a) to (e) over time, and separately from configuration (f) to (k) over time, and this is more clearly apparent from Figure 5 which shows the time axis explicitly. Configuration (a) is the same as configuration (e), and configuration (f) is the same as configuration (k), and Figure 5 indicates the progression through the two sets of configurations occurring twice to show how the pattern may repeat.

The uppermost graph in Figure 5 represents the sub-module voltage (indicated as a terminal voltage) as the sub-module commutates from configuration (a) to (e) over time, where the direction of current is termed positive and is suitable for charging the capacitor. The lowermost graph in Figure 5 represents the sub-module voltage (indicated as terminal voltage) as the sub-module commutates from configuration (f) to (k) over time, where the direction of current is termed negative and is suitable for discharging the capacitor. The middle two graphs apply to both of the uppermost and lowermost graphs, and show the switching states of the upper IGBT 201 and lower IGBT 203.

Configurations (a) to (c) show the commutation from the output configuration (capacitor in circuit - in the output state) to the bypass configuration (capacitor out of circuit - in the bypass state). To avoid shoot through (both IGBTs being on together and shorting out the capacitor) both IGBTs are off for a dead band period in the intermediate configuration shown in configuration (b). Thus, configuration (a) corresponds to the output configuration, configuration (b) corresponds to the intermediate configuration and configuration (c) corresponds to the bypass configuration, as discussed earlier. Configurations (f) to (h) show the same commutations from the output configuration (capacitor in circuit - in the output state) to the bypass configuration (capacitor out of circuit - in the bypass state), but where the current is flowing in the opposite direction. Thus, configuration (f) corresponds to the output configuration, configuration (g) corresponds to the intermediate configuration and configuration (h) corresponds to the bypass configuration, as discussed earlier.

In the a-to-c sequence, it can be seen that the current continues to flow though the capacitor until after the dead band period, i.e. in the intermediate configuration, so the bypass state (near-zero output or sub-module voltage) is only attained after the dead band period. Contrast this with the same switching sequence as applied to the progression from configurations (f) to (h), where the current is flowing in the opposite direction: it can be seen that the current ceases to flow though the capacitor as soon as both IGBTs are off in the intermediate configuration (g), which is before the end of the dead band period, so the bypass state is attained in the intermediate configuration (g) and before the end of the dead band period.

Configurations (c) to (e) show the commutation from the bypass configuration (capacitor out of circuit - in the bypass state) to the output configuration (capacitor in circuit - in the output state). Again, to avoid shoot through (both IGBTs being on together and shorting out the capacitor) both IGBTs are off for a dead band period in the intermediate configuration shown in configuration (d). Thus, configuration (c) corresponds to the bypass configuration, configuration (d) corresponds to the intermediate configuration and configuration (e) corresponds to the output configuration, as discussed earlier. Configurations (h) to (k) show the same commutations from the bypass configuration (capacitor out of circuit - in the bypass state) to the output configuration (capacitor in circuit - in the output state), but again where the current is flowing in the opposite direction. Thus, configuration (h) corresponds to the bypass configuration, configuration (j) corresponds to the intermediate configuration and configuration (k) corresponds to the output configuration, as discussed earlier.

In the c to e sequence, it can be seen that the current starts to flow though the capacitor as soon as both IGBTs are off which is before the end of the dead band period, so the output state (output voltage near to capacitor voltage) is attained before the end of the dead band period. Contrast this with the same switching sequence as applied to the progression from configurations (h) to (k), where the current is flowing in the opposite direction: it can be seen that the current does not flow though the capacitor until after the dead band period so the output state is only attained after the dead band period.

With comparator or other monitoring of the sub-module voltage (terminal voltage) just prior to the second IGBT (the IGBT after the dead band period) being switched, i.e. just prior to transitioning out of the intermediate configuration, this behaviour can be used to determine which way the current is flowing. For example, looking at Figure 5, if the sub-module voltage is found to be greater than a threshold voltage (which can be arranged to be so when the sub-module voltage is near to the capacitor voltage) just prior to transitioning out of the intermediate configuration it may be determined that the current direction is positive. On the other hand, if the sub-module voltage is found to be less than a threshold voltage (which can be arranged to be so when the sub-module voltage is near zero) just prior to transitioning out of the intermediate configuration it may be determined that the current direction is negative. Advantageously, the difference between the near zero (0 V) and capacitor voltages (typically measured in kV) may be very large, and as such the voltage monitoring may be crude in the sense that it need not have high accuracy (and a Boolean measurement may be sufficient).

Incidentally, looking at Figures 4 and 5, it will be appreciated that the sub-module voltage (terminal voltage) is just one example voltage affected by the transition between configurations. Another example would be to measure the voltage over the IGBT 201, or for example over the valve (e.g. valve 101a) or limb concerned. Also, measuring the sub-module voltage (terminal voltage) or other affected voltage just prior to transitioning out of the intermediate configuration is one example way of distinguishing between the uppermost and lowermost graphs in Figure 5 (i.e. determining the direction of current flow along the current path). Another example would be to measure how long it takes for the affected voltage to change due to the transition, and compare this time period to the dead band period. For one current direction the measured time period will be longer than the dead band period and for the other current direction the measured time period will be shorter than the dead band period. The present disclosure will be understood accordingly.

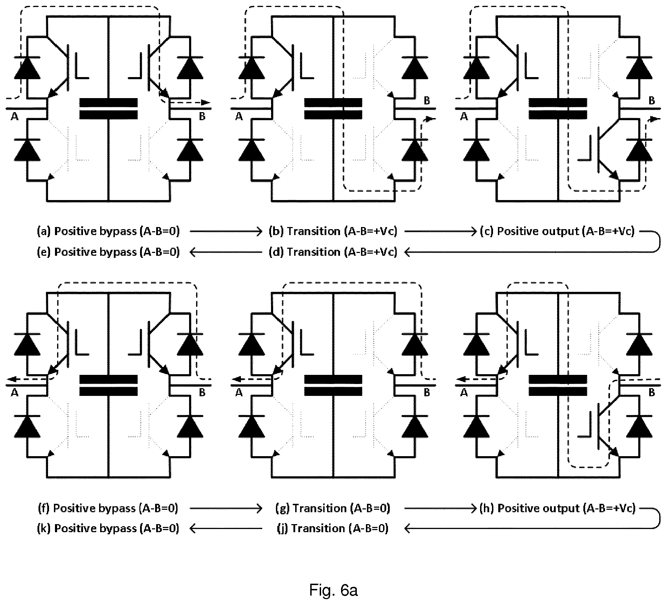

**Figure 6a** is a schematic diagram useful for understanding an example set of commutations in an example sub-module, for example one of the sub-modules 102 of the valve 101a, but having a full-bridge arrangement. As discussed earlier, any of the sub-modules 102 of Figure 1 may be provided with a full-bridge arrangement.

It will be appreciated (by comparison with Figure 6a) that the half-bridge sub-module 102 of Figure 2 could be converted into a full-bridge sub-module by providing a second series arrangement of switching units in parallel with the energy storage device 202, also controlled by the sub-module control unit 206, and with the input/output terminals then being at the mid-point of each of the two series arrangements (labelled as A and B in Figure 6a). The voltage measuring unit 208 in the full-bridge arrangement could then be connected between these input/output terminals.

Returning to Figure 6a, the example full-bridge sub-module is shown in ten configurations labelled (a) to (k), respectively. There is no configuration (i). These configurations are equivalent to configurations labelled (a) to (k), respectively, in Figure 4, but show a different set of commutations. As before, only the switching units and the energy storage device are shown in Figure 6a. Similarly, the switches may be considered IGBTs, the energy storage device may be considered a capacitor, and the unidirectional current devices may be considered diodes. The dashed line represents the current path through the sub-module, and an IGBT is on when shown solid and off when shown in faint dotted form. It will be appreciated therefore that Figure 6a can be understood readily by comparison with Figure 4.

It will be appreciated that a full-bridge arrangement enables the capacitor to be connected either way around (positively or negatively) into the current path, or bypassed in two different ways (referred to here as positively and negatively).

Configurations (a) to (c) thus show the commutation from a bypass configuration (capacitor out of circuit - in a positive bypass state) to an output configuration (capacitor in circuit - in a positive output state). Configurations (c) to (e) thus show the commutation from an output configuration (capacitor in circuit - in a positive output state) to a bypass configuration (capacitor out of circuit - in a positive bypass state). Configurations (f) to (k) show the same commutations as (a) to (e), but where the current is flowing in the opposite direction.

Note that in the intermediate configurations (b) and (d) the positive output state is maintained or attained, whereas in the intermediate configurations (g) and (j) it is the positive bypass state which is maintained or attained. The intermediate configurations are labelled as "transition" configurations in Figure 6a.

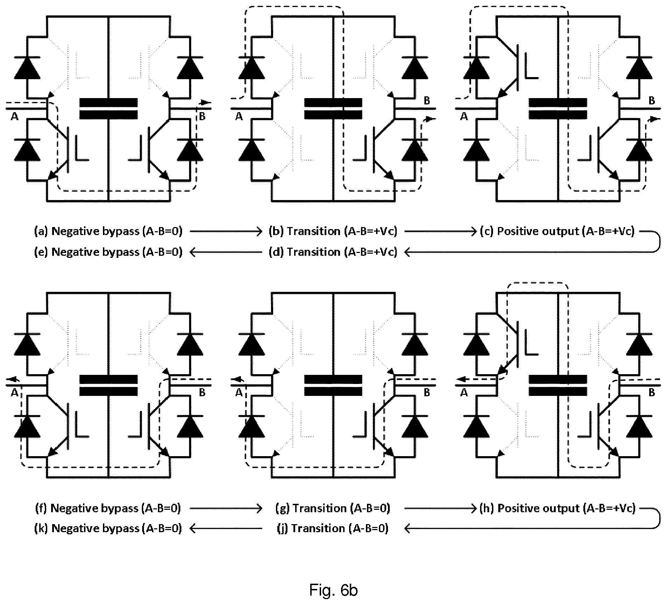

**Figure 6b** is a schematic diagram useful for understanding another example set of commutations in the same example full-bridge sub-module as in Figure 6a, using the same form of representation.

Configurations (a) to (c) thus show the commutation from a bypass configuration (capacitor out of circuit - in a negative bypass state) to an output configuration (capacitor in circuit - in a positive output state). Configurations (c) to (e) thus show the commutation from an output configuration (capacitor in circuit - in a positive output state) to a bypass configuration (capacitor out of circuit - in a negative bypass state). Configurations (f) to (k) show the same commutations as (a) to (e), but where the current is flowing in the opposite direction.

Note that in the intermediate configurations (b) and (d) the positive output state is maintained or attained, whereas in the intermediate configurations (g) and (j) it is the negative bypass state which is maintained or attained.

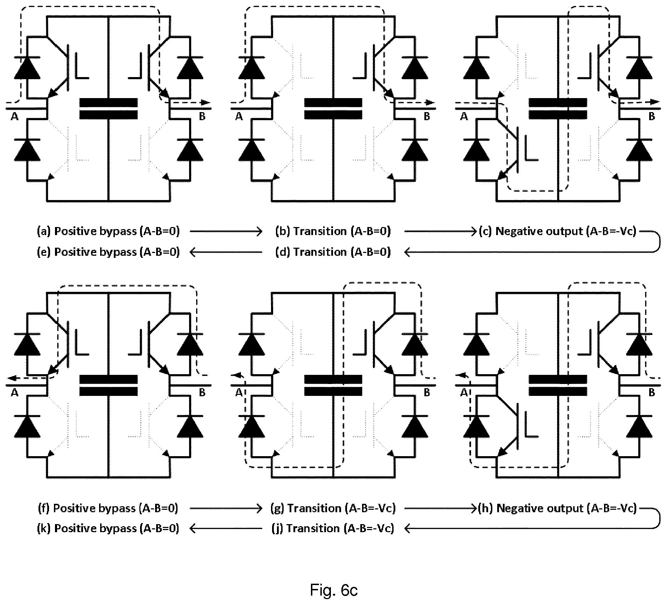

**Figure 6c** is a schematic diagram useful for understanding another example set of commutations in the same example full-bridge sub-module as in Figure 6a, using the same form of representation.

Configurations (a) to (c) thus show the commutation from a bypass configuration (capacitor out of circuit - in a positive bypass state) to an output configuration (capacitor in circuit - in a negative output state). Configurations (c) to (e) thus show the commutation from an output configuration (capacitor in circuit - in a negative output state) to a bypass configuration (capacitor out of circuit - in a positive bypass state). Configurations (f) to (k) show the same commutations as (a) to (e), but where the current is flowing in the opposite direction.

Note that in the intermediate configurations (b) and (d) the positive bypass state is maintained or attained, whereas in the intermediate configurations (g) and (j) it is the negative output state which is maintained or attained.

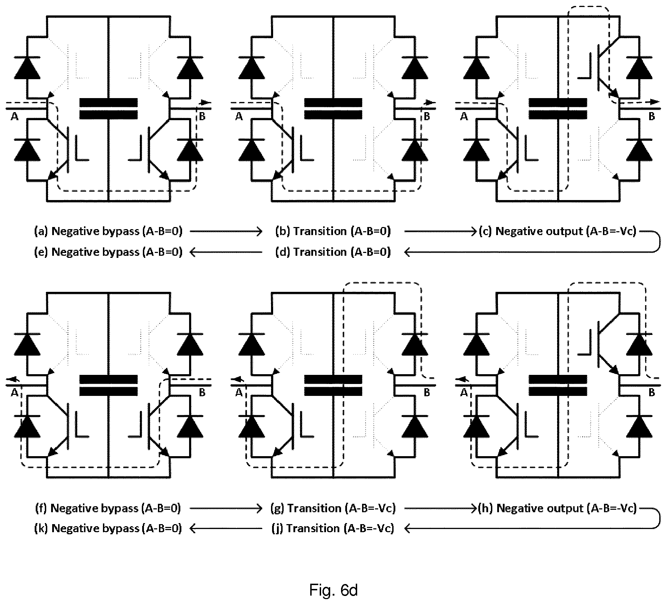

**Figure 6d** is a schematic diagram useful for understanding another example set of commutations in the same example full-bridge sub-module as in Figure 6a, using the same form of representation.

Configurations (a) to (c) thus show the commutation from a bypass configuration (capacitor out of circuit - in a negative bypass state) to an output configuration (capacitor in circuit - in a negative output state). Configurations (c) to (e) thus show the commutation from an output configuration (capacitor in circuit - in a negative output state) to a bypass configuration (capacitor out of circuit - in a negative bypass state). Configurations (f) to (k) show the same commutations as (a) to (e), but where the current is flowing in the opposite direction.

Note that in the intermediate configurations (b) and (d) the negative bypass state is maintained or attained, whereas in the intermediate configurations (g) and (j) it is the negative output state which is maintained or attained.

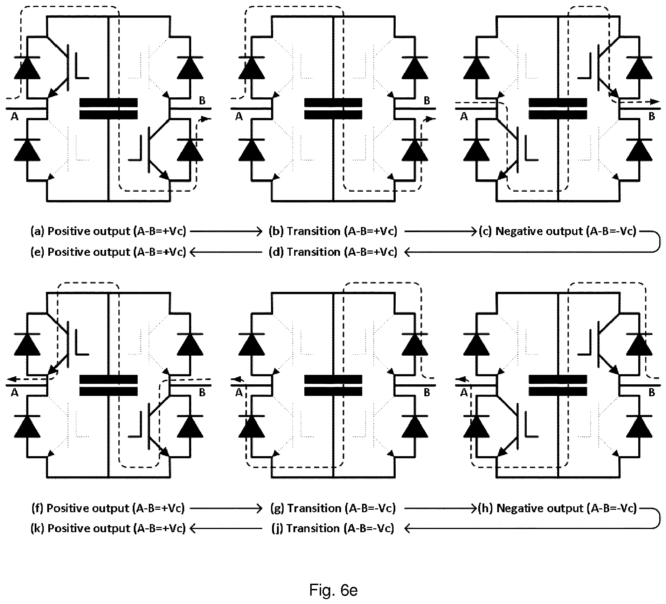

**Figure 6e** is a schematic diagram useful for understanding another example set of commutations in the same example full-bridge sub-module as in Figure 6a, using the same form of representation.

Configurations (a) to (c) thus show the commutation from an output configuration (capacitor in circuit - in a positive output state) to an output configuration (capacitor in circuit - in a negative output state). Configurations (c) to (e) thus show the commutation from an output configuration (capacitor in circuit - in a negative output state) to an output configuration (capacitor in circuit - in a positive output state). Configurations (f) to (k) show the same commutations as (a) to (e), but where the current is flowing in the opposite direction.

Note that in the intermediate configurations (b) and (d) the positive output state is maintained or attained, whereas in the intermediate configurations (g) and (j) it is the negative output state which is maintained or attained.

Considering Figures 6a to 6e collectively, again with comparator or other monitoring of the sub-module voltage (terminal voltage) just prior to the second IGBT (the IGBT after the dead band period) being switched, i.e. just prior to transitioning out of the intermediate configuration, this behaviour can be used to determine which way the current is flowing. For example, in the case of each of Figures 6a and 6d, there will be a difference between near zero (0 V) and capacitor voltages (typically measured in kV) similar to before. In the case of Figure 6e there will be the difference between positive and negative capacitor voltages. Again, the voltage monitoring may be crude in the sense that it need not have high accuracy.

Again, it will be appreciated that the sub-module voltage (terminal voltage) is just one example voltage affected by the transition between configurations. Also, measuring the sub-module voltage (terminal voltage) or other affected voltage just prior to transitioning out of the intermediate configuration is one example way of distinguishing between the two directions of current flow along the current path.

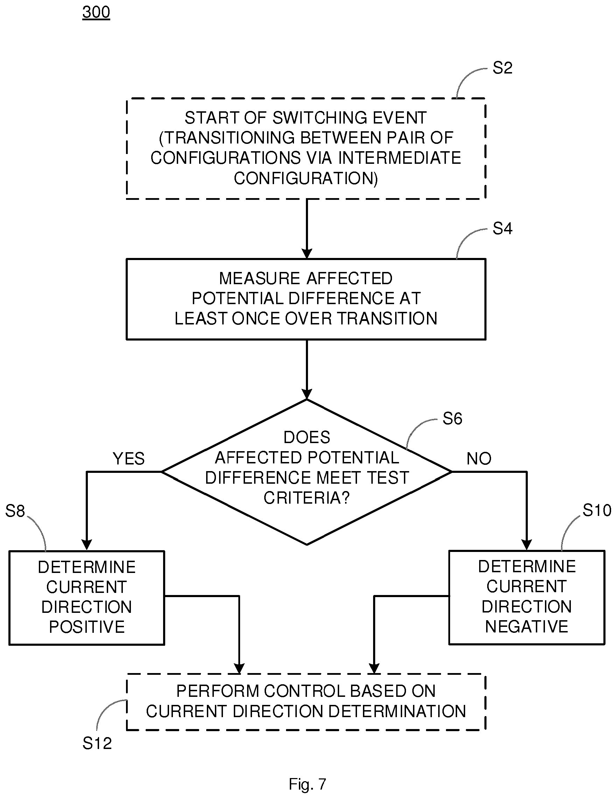

**Figure 7** is a schematic diagram of a control method 300 embodying the present invention. Method 300 comprises steps S2 to S12, and may be considered in conjunction with Figures 4 and 5, or any of Figures 6a to 6e.

Method 300 starts with step S2, when a switching event (or transition) is initiated or triggered in respect of a given sub-module 102 (which may have a half-bridge or full-bridge arrangement). Thus, it could be considered that method 300 is performed in relation to one, some or all sub-modules 102, and in relation to one, some or each switching event. A switching event here corresponds to the sub-module being transitioned between a pair of different configurations (in either direction) via an intermediate configuration (as is shown in each of Figures 4 and 6a to 6e), and thus corresponds to a decision to change how the capacitor voltage of that sub-module 102 affects the valve voltage (or another affected voltage such as the voltage over the converter arm or valve concerned).

The method proceeds to step S4 where the sub-module voltage (as one example affected voltage) is measured at least once in or over that switching event, for example just prior to exiting the intermediate configuration, i.e. whilst in the intermediate configuration. Other examples are mentioned below. The method then proceeds to step S6.

In step S6 the measured sub-module voltage is tested against given criteria (or a given criterion). It will be appreciated that what the test is will depend on the type of sub-module (e.g. half-bridge or full-bridge arrangement), the particular pair of configurations concerned (see e.g. Figures 6a to 6e) and the way in which the affected voltage has been measured.

For example, in the case of Figure 4, if the sub-module voltage is measured in step S4 just prior to exiting the intermediate configuration, then that measured voltage may be compared to a threshold voltage. For example, if the measured voltage is greater than (or greater than or equal to) a threshold voltage (for example 100 V) the method may proceed to step S8 where it is determined that the current direction is positive, however if the measured voltage is less than the threshold voltage the method may proceed to step S10 where it is determined that the current direction is negative. Similar tests could be applied in the case of Figures 6a to 6d, adapted accordingly. In the case of Figure 6e, the test may be based on the polarity of the measured sub-module, for example.

As another example, in the case of Figure 4, if the sub-module voltage is measured in step S4 more than once over the switching event, such as just prior to exiting the intermediate configuration and after exiting the intermediate configuration, or several times over the switching event, then it may be possible to effectively measure a time taken for the voltage to change (see e.g. Figure 5). For example, the time taken for the voltage to fall from high to low in a to c in Figure 5, would be different from in f to h. That measured time taken may be compared to a threshold time period. For example (continuing to consider a to c versus f to h in Figure 5), if the measured time taken is greater than (or greater than or equal to) the time period corresponding to b and g (the dead band period) in Figure 5, the method may proceed to step S8 where it is determined that the current direction is positive, however if the measured time taken is less than that time period the method may proceed to step S10 where it is determined that the current direction is negative. Similar tests could be applied in the case of Figures 6a to 6e, adapted accordingly.

Of course, continuing the Figure 5 example for convenience, the skilled person would appreciate that here are many ways to measure the voltage so as to detect whether the voltage changes as in the uppermost graph (positive current direction) or the lowermost graph (negative current direction). Essentially, the key is to detect whether the voltage changes when in the intermediate configuration (e.g. b, d, g and j in Figure 5) or after leaving that intermediate configuration, as will be apparent from Figure 5.

The current direction determination of step S8 or S10 may then be used in step S12 to perform control within the VSC 100. For example, the direction determination can be communicated to the relevant valve control unit 103a, 103b or central control unit 104, possibly via the sub-module control unit 206 as shown in Figure 2. This current direction determination may be made in any of these units (or in a combination of them), based on the voltage information. The determined direction may in turn be used in any of these units (or in a combination of them). Units 206 and/or 103 may form part of a VBE (valve base electronics) controller, which may be provided on a per valve basis.

The current direction information may be used in e.g. a capacitor balancing function, and/or may be communicated to all other sub-modules 102 in the same valve 101a, 101b, which share the same current but may not be switching at that time, so they can apply dead band compensation correctly at their next commutation. Such capacitor balancing and/or dead band compensation may be considered encompassed by step S12.

As previously described, knowing the current direction is useful in MMC sorting algorithms to ensure that the many capacitor voltages stay balanced. When the current direction is suitable for charging the capacitors, sub-modules whose capacitors have relatively low voltages can be used to help charge up those capacitors. Conversely, when the current direction is suitable for discharging the capacitors, sub-modules whose capacitors have relatively high voltages can be used to help discharge those capacitors. It may be desirable to balance the capacitor voltages, i.e. reduce the spread of voltages across the capacitors such that they ideally all have the same capacitor voltage.

Dead band compensation may be summarised as adjusting the timing of the IGBT switching so that the desired sub-module state is attained at the same time regardless of current direction. It will be appreciated for example from Figure 5 that timing of when the bypass or output state is achieved will differ depending on the current direction when transitioning between the output and bypass configurations (in either direction). Similar considerations apply to Figures 6a to 6e, although in Figure 6e there are both negative and positive output states. It may thus be desirable to start a switching event early or late relative to a nominal switching time depending on the current direction, so that the desired sub-module state is attained at the same time regardless of current direction.

Taking an example HVDC scheme with 640 kV DC across the converter, a valve voltage Vv might be expressed as:

$$Vv = 320\ kV + (320\ kV \times 0.95 \times 1.15\ (\sin(100\pi t) + \sin(3\times100\pi t) / 6))$$

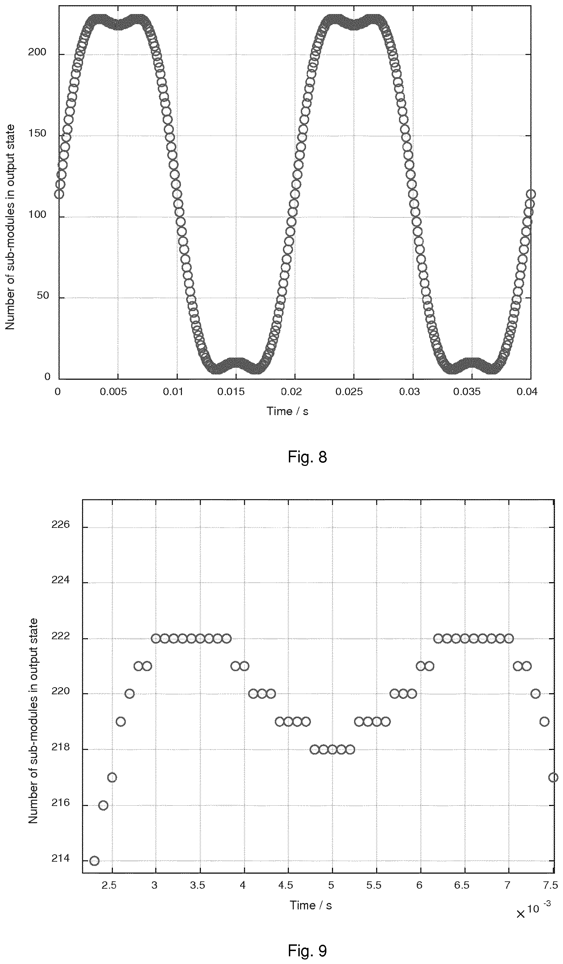

Considering the arrangement in Figure 4 for example, the number of sub-modules needed to synthesis this voltage, if each contributes 2.8 kV is then Vv / 2.8, rounded to the nearest integer. **Figure 8** is a graph showing the number of sub-modules in a given valve in the output configuration (corresponding to the output state) overtime, in such an example. **Figure 9** is graph which zooms in on a portion of the Figure 8 graph. It can be seen from Figures 8 and 9 that the number of sub-modules in a given valve in the output configuration varies over time, effectively mirroring the voltage waveforms of Figures 3a and 3b.

From Figure 9 it can be seen that, in this example, at worst there is a 0.9 ms period where the number of sub-modules in the output configuration does not change, and hence there may not be progressions in configurations (i.e. switching events) in a sub-module as in Figure 4 which would enable the current direction to be determined or derived.

Given there is a current-reversal every half cycle (10 ms at 50 Hz - see Figures 3a and 3b) the current direction information may thus be wrong for, at worst, 9% of the time which is considered acceptable for capacitor balancing (having the wrong current-direction information may cause the capacitor balancing algorithm to diverge the capacitor voltages but diverging for 9% of the time and converging for the remaining 91% is acceptable).

In respect of dead band compensation, the subsequent switching event could be wrong (in terms of timing) but the dead band compensation for each switching event following a current direction reversal may be wrong anyway, regardless of the dwell period; there will only be 2 incorrect (timing) compensations per cycle.

Of course, although the fact that the number of sub-modules in the output configuration does not change in the 0.9 ms period in Figure 9 suggests that there are no switching events in that period, it would be possible to continue with switching events in this period. For example, a pair of modules configured as in Figure 4 could be caused to swap between the output and bypass configurations, thus keeping the overall number of sub-modules in the output configuration unchanged, in order to continue to obtain accurate and up-to-date current direction determinations. The noise related to such "swapping" may for example be traded off against the benefits of having accurate and up-to-date current direction determinations.

It will accordingly be understood that the overall idea described herein is to monitor the voltage at the midpoint of a sub-module converter leg, such as the output connection of an MMC half-bridge sub-module, and determine the direction of the current by whether the voltage changes before or after the end of the switching dead band period, i.e. before or after the end of the period in which it is in the intermediate configuration. In an MMC this information may be shared with VBE and among all sub-modules in each valve, either by listening to a ubiquitous data bus or via communication with VBE, so that correct sorting in capacitor balancing algorithms and/or correct dead band compensation can be applied.

This technique provides accurate current direction information to at least one order of magnitude smaller current than a valve current sensor with standard components in the sub-modules. By way of contrast, using a traditional valve current sensor it may be necessary to circulate a current of at least 10 A peak, at zero load, in order to keep the capacitors balanced, which may lead to undesirable no-load losses.

In general therefore, embodiments of the invention relate to a converter system, and in particular to a converter such as a Modular Multilevel

Converter (MMC), which enables accurate current direction determination - and thus accurate capacitor balancing and/or dead band compensation even at low currents. Associated control methods (see e.g. Figure 7), which may be implemented by a computer program executed on a processor, or e.g. on an FPGA, also embody the present invention.

In any of the above aspects, the various control features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

**Claims**

1. A converter (100) having at least one converter apparatus (101a, 101b) defining a current path within the converter, the converter comprising:

   a plurality of sub-modules (102) connectable in series to form at least part of the converter apparatus such that current flowing along the current path flows through each of those sub-modules, each sub-module (102) comprising an energy storage device (202) and switching circuitry (201, 203, 204, 205) configured to direct the flowing current so that it either flows through or bypasses the energy storage device (202), the switching circuitry (201, 203, 204, 205) controllable to cause the sub-module (102) to transition between at least one pair of different configurations via a corresponding intermediate configuration applied in order to avoid switches (201, 203) of the switching circuitry being on at the same time and shorting out the energy storage device (202), that transition affecting a potential difference such that it exhibits an associated change either when the sub-module (102) is in the intermediate configuration concerned or after it has exited that intermediate configuration dependent on a direction of current flow along the current path for that transition; and
   **characterized in that** it comprises a controller (104, 103a, 103b, 206) configured to carry out a direction-determination operation in respect of at least one said sub-module (102), the direction-determination operation determining the direction of current flow along the current path for a said transition of that sub-module (102) by measuring the time taken for the associated change in potential difference to occur and by measuring the affected potential difference concerned at least once over that transition to determine whether the associated change occurs when that sub-module (102) is in the intermediate configuration concerned or after it has exited that intermediate configuration.

2. The converter as claimed in claim 1, wherein the controller (104, 103a, 103b, 206) is configured, in said direction-determination operation, to measure the affected potential difference when the sub-module (102) concerned is in the intermediate configuration of the transition concerned, and to determine the direction of current flow along the current path for that transition based on that potential-difference measurement.

3. The converter as claimed in claim 2, wherein the controller (104, 103a, 103b, 206) is configured, in said direction-determination operation, to determine that the current flow:

   has a first direction if the measured potential difference is larger than a threshold potential difference and has a second direction opposite to the first direction if the measured potential difference is smaller than the threshold potential difference; and/or
   has the first direction if the measured potential difference has a positive polarity and has the second direction if the measured potential difference has a negative polarity.

4. The converter as claimed in any of the preceding claims, wherein the affected potential difference is, or is indicative of, a potential difference across the sub-module (102) concerned.

5. The converter as claimed in any of the preceding claims, wherein the controller (104, 103a, 103b, 206) is configured to determine the direction of current flow differently for different pairs of configurations.

6. The converter as claimed in any of the preceding claims, wherein:

   the controller (104, 103a, 103b, 206) is configured to carry out a said direction-determination operation in respect of the least one said sub-module (102) each time it transitions between a said pair of configurations; or
the controller (104, 103a, 103b, 206) is configured to carry out a said direction-determination operation in respect of each of said sub-modules (102); or
the controller (104, 103a, 103b, 206) is configured to carry out a said direction-determination operation in respect of each of said sub-modules (102), each time they transition between a said pair of configurations.

7. The converter as claimed in any of the preceding claims, wherein the controller (104, 103a, 103b, 206) is operable to control at least one or each of the sub-modules (102) to cause them to transition between a said pair of configurations.

8. The converter as claimed in any of the preceding claims, wherein the controller (104, 103a, 103b, 206) is operable to control when at least one or each of the sub-modules (102) transitions between a said pair of configurations in order to control a voltage waveform formed by a potential difference between terminals of the converter apparatus, optionally wherein the controller (104, 103a, 103b, 206) is configured to control the timing of each said transition based on at least one determined said direction of current flow so that said voltage waveform matches a target waveform.

9. The converter as claimed in claim 7 or 8, wherein the controller (104, 103a, 103b, 206) is configured to control the timing of successive said transitions each based on a most recent said determined direction of current flow.

10. The converter as claimed in any of claims 7 to 9, wherein the controller (104, 103a, 103b, 206) is configured to control which sub-modules (102) transition based on at least one determined said direction of current flow so that potential differences across the energy storage devices (202) tend towards a common potential difference.

11. The converter as claimed in any of claims 7 to 10, wherein the controller (104, 103a, 103b, 206) is configured to control which sub-modules (102) transition in successive said transitions each based on a most recent said determined direction of current flow.

12. The converter as claimed in any of claims 7 to 11, wherein the controller (104, 103a, 103b, 206) is configured to control the transitions of one or more said sub-modules (102) based on at least one said direction of current flow determined based on a said potential difference measured in respect of another said sub-module (102).

13. A method of controlling a converter (100) having at least one converter apparatus (101a, 101b) defining a current path within the converter, the converter comprising a plurality of sub-modules (102) connectable in series to form at least part of the converter apparatus such that current flowing along the current path flows through each of those sub-modules, each sub-module comprising an energy storage device (202) and switching circuitry (201, 203, 204, 205) configured to direct the flowing current so that it either flows through or bypasses the energy storage device, the switching circuitry controllable to cause the sub-module to transition between at least one pair of different configurations via a corresponding intermediate configuration applied in order to avoid switches (201, 203) of the switching circuitry being on at the same time and shorting out the energy storage device (202), that transition affecting a potential difference such that it exhibits an associated change either when the sub-module is in the intermediate configuration concerned or after it has exited that intermediate configuration dependent on a direction of current flow along the current path for that transition, the method being **characterized by** comprising:
carrying out a direction-determination operation in respect of at least one said sub-module, the direction-determination operation determining the direction of current flow along the current path for a said transition of that sub-module based on the timing of a voltage waveform formed by the affected potential difference concerned relative to switching commands provided to control the switching circuitry concerned for that transition.

**Patentansprüche**

1. Wandler (100), der mindestens eine Wandlereinrichtung (101a, 101b) aufweist, die einen Stromweg innerhalb des Wandlers definiert, wobei der Wandler umfasst:

eine Vielzahl von Teilmodulen (102), die in Reihe verbindbar sind, um mindestens einen Teil der Wandlereinrichtung derart zu bilden, dass Strom, der entlang des Stromwegs fließt, durch jedes dieser Teilmodule fließt, wobei jedes Teilmodul (102) eine Energiespeicherungsvorrichtung (202) und Umschaltschaltungsanordnungen (201, 203, 204, 205) umfasst, die dazu konfiguriert sind, den fließenden Strom derart zu lenken, dass er entweder durch die Energiespeicherungsvorrichtung (202) fließt oder sie umgeht, wobei die Umschaltschaltungsanordnungen (201, 203, 204, 205) steuerbar sind, um das Teilmodul (102) zu veranlassen, zwischen mindestens einem Paar unterschiedlicher Konfigurationen über eine entsprechende Zwischenkonfiguration überzugehen, die angewandt wird, um zu vermeiden, dass Umschalter (201, 203) der Schaltungsanordnungen gleichzeitig Ein sind und die Energiespeicherungsvorrichtung (202) kurzschließen, wobei der Übergang eine Potenzialdifferenz derart bewirkt, dass sie eine assoziierte Änderung entweder darlegt, wenn das Teilmodul (102) in der betreffenden Zwischenkonfiguration ist oder nachdem es aus dieser Zwischenkonfiguration in Abhängigkeit von einer Stromflussrichtung entlang des Stromwegs für diesen Übergang ausgetreten ist; und

**dadurch gekennzeichnet, dass** er eine Steuereinheit (104, 103a, 103b, 206) umfasst, die dazu konfiguriert ist, einen Richtungsbestimmungsvorgang im Zusammenhang mit mindestens einem Teilmodul (102) auszuführen, wobei der Richtungsbestimmungsvorgang die Stromflussrichtung entlang des Stromwegs für den Übergang dieses Teilmoduls (102) bestimmt, indem die Zeit gemessen wird, die benötigt wird, damit die assoziierte Potenzialdifferenzänderung auftritt, und durch Messen der betreffenden bewirkten Potenzialdifferenz mindestens einmal während dieses Übergangs, um zu bestimmen, ob die assoziierte Änderung auftritt, wenn das Teilmodul (102) in der betreffenden Zwischenkonfiguration ist oder nachdem es diese Zwischenkonfiguration verlassen hat.

2. Wandler nach Anspruch 1, wobei die Steuereinheit (104, 103a, 103b, 206) dazu konfiguriert ist, bei dem Richtungsbestimmungsvorgang die bewirkte Potenzialdifferenz zu messen, wenn das betreffende Teilmodul (102) in der Zwischenkonfiguration des betreffenden Übergangs ist, und die Stromflussrichtung entlang des Stromwegs für diesen Übergang basierend auf der Potenzialdifferenzmessung zu bestimmen.

3. Wandler nach Anspruch 2, wobei die Steuereinheit (104, 103a, 103b, 206) bei dem Richtungsbestimmungsvorgang dazu konfiguriert ist, zu bestimmen, dass der Stromfluss:

eine erste Richtung aufweist, falls die gemessene Potenzialdifferenz größer ist als eine Schwellenpotenzialdifferenz, und eine zweite Richtung entgegengesetzt zu der ersten Richtung aufweist, falls die gemessene Potenzialdifferenz kleiner ist als die Schwellenpotenzialdifferenz; und/oder
die erste Richtung aufweist, falls die gemessene Potenzialdifferenz eine positive Polung aufweist, und die zweite Richtung aufweist, falls die gemessene Potenzialdifferenz eine negative Polung aufweist.

4. Wandler nach einem der vorstehenden Ansprüche, wobei die bewirkte Potenzialdifferenz eine Potenzialdifferenz über das betreffende Teilmodul (102) ist oder darauf hinweist.

5. Wandler nach einem der vorstehenden Ansprüche, wobei die Steuereinheit (104, 103a, 103b, 206) dazu konfiguriert ist, die Stromflussrichtung unterschiedlich für unterschiedliche Paare von Konfigurationen zu bestimmen.

6. Wandler nach einem der vorstehenden Ansprüche, wobei:

die Steuereinheit (104, 103a, 103b, 206) dazu konfiguriert ist, den Richtungsbestimmungsvorgang bezüglich des mindestens einen Teilmoduls (102) jedes Mal auszuführen, wenn es zwischen einem Paar von Konfigurationen übergeht; oder
die Steuereinheit (104, 103a, 103b, 206) dazu konfiguriert ist, den Richtungsbestimmungsvorgang bezüglich jedes der Teilmodule (102) auszuführen; oder
die Steuereinheit (104, 103a, 103b, 206) dazu konfiguriert ist, den Richtungsbestimmungsvorgang bezüglich jedes der Teilmodule (102) jedes Mal auszuführen, wenn sie zwischen einem Paar von Konfigurationen übergehen.

7. Wandler nach einem der vorstehenden Ansprüche, wobei die Steuereinheit (104, 103a, 103b, 206) betreibbar ist, um mindestens eines oder jedes der Teilmodule (102) zu steuern, um sie zu veranlassen, zwischen einem Paar von Konfigurationen überzugehen.

8. Wandler nach einem der vorstehenden Ansprüche, wobei die Steuereinheit (104, 103a, 103b, 206) betreibbar ist, um zu steuern, wann mindestens eines oder jedes der Teilmodule (102) zwischen einem Paar von Konfigurationen übergeht, um eine Spannungswellenform, die von einer Potenzialdifferenz zwischen Endgeräten der Wandlereinrichtung gebildet wird, zu steuern, wobei optional die Steuereinheit (104, 103a, 103b, 206) dazu konfiguriert ist, das Timing jedes Übergangs basierend auf mindestens einer bestimmten Stromflussrichtung derart zu steuern, dass die Spannungswellenform mit einer Zielwellenform übereinstimmt.

9. Wandler nach Anspruch 7 oder 8, wobei die Steuereinheit (104, 103a, 103b, 206) dazu konfiguriert ist, das Timing der aufeinanderfolgenden Übergänge, die jeweils auf einer jüngsten bestimmten Stromflussrichtung basieren, zu steuern.

10. Wandler nach einem der Ansprüche 7 bis 9, wobei die Steuereinheit (104, 103a, 103b, 206) dazu konfiguriert ist basierend auf mindestens einer bestimmten Stromflussrichtung derart zu steuern, welche Teilmodule (102) übergehen, dass Potenzialdifferenzen über die Energiespeicherungsvorrichtungen (202) zu einer gemeinsamen Potenzialdifferenz tendieren.

11. Wandler nach einem der Ansprüche 7 bis 10, wobei die Steuereinheit (104, 103a, 103b, 206) dazu konfiguriert ist zu steuern, welche Teilmodule (102) jeweils basierend auf einer jüngsten bestimmten Stromflussrichtung in aufeinanderfolgenden Übergängen übergehen.

12. Wandler nach einem der Ansprüche 7 bis 11, wobei die Steuereinheit (104, 103a, 103b, 206) dazu konfiguriert ist, die Übergänge eines oder mehrerer Teilmodule (102) basierend mindestens auf der Stromflussrichtung, die basierend auf der Potenzialdifferenz, die bezüglich eines anderen Teilmoduls (102) gemessen wird, bestimmt wird, zu steuern.

13. Verfahren zum Steuern eines Wandlers (100), der mindestens eine Wandlereinrichtung (101a, 101b) umfasst, die einen Stromweg innerhalb des Wandlers definiert, wobei der Wandler eine Vielzahl von Teilmodulen (102) umfasst, die in Reihe verbindbar sind, um mindestens einen Teil der Wandlereinrichtung derart zu bilden, dass Strom, der entlang des Stromwegs fließt, durch jedes der Teilmodule fließt, wobei jedes Teilmodul eine Energiespeicherungsvorrichtung (202) und Umschaltschaltungsanordnungen (201, 203, 204, 205) umfasst, die dazu konfiguriert sind, den fließenden Strom derart zu lenken, dass er entweder durch die Energiespeicherungsvorrichtung durchgeht oder sie umgeht, wobei die Schaltungsanordnungen steuerbar sind, um die Teilmodule zu veranlassen, zwischen mindestens einem Paar unterschiedlicher Konfigurationen über eine entsprechende Zwischenkonfiguration, die angewandt wird, um zu vermeiden, dass Umschalter (201, 203) der Schaltungsanordnungen, die gleichzeitig Ein sind, übergehen und die Energiespeicherungsvorrichtung (202) kurzschließen, überzugehen, wobei dieser Übergang eine Potenzialdifferenz derart bewirkt, dass sie eine assoziierte Änderung entweder darlegt, wenn das Teilmodul in der betreffenden Zwischenkonfiguration ist oder nachdem es diese Zwischenkonfiguration abhängig von einer Stromflussrichtung entlang des Stromwegs für diesen Übergang verlassen hat, wobei das Verfahren **dadurch gekennzeichnet ist, dass** es umfasst:
Ausführen eines Richtungsbestimmungsvorgangs bezüglich mindestens eines Teilmoduls, wobei der Richtungsbestimmungsvorgang die Stromflussrichtung entlang des Stromwegs für einen Übergang dieses Teilmoduls basierend auf dem Timing einer Spannungswellenform bestimmt, die von der betreffenden bewirkten Potenzialdifferenz bezüglich Umschaltbefehlen gebildet wird, die bereitgestellt werden, um die betreffenden Umschaltungsanordnungen für diesen Übergang zu steuern.

## Revendications

1. Convertisseur (100) présentant au moins un appareil de convertisseur (101a, 101b) définissant un trajet de courant à l'intérieur du convertisseur, le convertisseur comprenant :

une pluralité de sous-modules (102) pouvant être connectés en série pour former au moins une partie de l'appareil de convertisseur de sorte que du courant circulant le long du trajet de courant circule à travers chacun de ces sous-modules, chaque sous-module (102) comprenant un dispositif de stockage d'énergie (202) et des circuits de commutation (201, 203, 204, 205) configurés pour diriger le courant circulant de sorte qu'il circule à travers ou contourne le dispositif de stockage d'énergie (202), les circuits de commutation (201, 203, 204, 205) pouvant être commandé pour amener le sous-module (102) à effectuer une transition entre au moins une paire de configurations différentes via une configuration intermédiaire correspondante appliquée afin d'éviter que des commutateurs (201, 203) des circuits de commutation ne soient allumés en même temps et ne court-circuitent le dispositif de stockage d'énergie (202), cette transition affectant une différence de potentiel de sorte qu'elle présente un changement associé soit lorsque le sous-module (102) est dans la configuration intermédiaire concernée ou après qu'il ait quitté cette configuration intermédiaire en fonction d'une direction de circulation de courant le long du trajet de courant pour cette transition ; et

**caractérisé en ce qu'**il comprend un dispositif de commande (104, 103a, 103b, 206) configuré pour effectuer une opération de détermination de direction concernant au moins un desdits sous-modules (102), l'opération de détermination de direction déterminant la direction de circulation de courant le long du trajet de courant pour une dite transition de ce sous-module (102) en mesurant le temps mis pour que le changement associé de différence de potentiel se produise et en mesurant la différence de potentiel affectée concernée au moins une fois sur cette transition pour déterminer si le changement associé se produit lorsque ce sous-module (102) est dans la configuration intermédiaire concernée ou après qu'il a quitté cette configuration intermédiaire.

2. Convertisseur selon la revendication 1, dans lequel le dispositif de commande (104, 103a, 103b, 206) est configuré, dans ladite opération de détermination de direction, pour mesurer la différence de potentiel affectée lorsque le sous-module (102) concerné est dans la configuration intermédiaire de la transition concernée, et pour déterminer la direction de circulation de courant le long du trajet de courant pour cette transition sur la base de cette mesure de différence de potentiel.

3. Convertisseur selon la revendication 2, dans lequel le dispositif de commande (104, 103a, 103b, 206) est configuré, dans ladite opération de détermination de direction, pour déterminer que la circulation de courant :

présente une première direction si la différence de potentiel mesurée est supérieure à une différence de potentiel de seuil et présente une seconde direction opposée à la première direction si la différence de potentiel mesurée est inférieure à la différence de potentiel de seuil ; et/ou
présente la première direction si la différence de potentiel mesurée présente une polarité positive et présente la seconde direction si la différence de potentiel mesurée présente une polarité négative.

4. Convertisseur selon l'une quelconque des revendications précédentes, dans lequel la différence de potentiel affectée est ou est indicative d'une différence de potentiel à travers le sous-module (102) concerné.

5. Convertisseur selon l'une quelconque des revendications précédentes, dans lequel le dispositif de commande (104, 103a, 103b, 206) est configuré pour déterminer la direction de circulation de courant différemment pour différentes paires de configurations.

6. Convertisseur selon quelconque des revendications précédentes, dans lequel :

le dispositif de commande (104, 103a, 103b, 206) est configuré pour effectuer une dite opération de détermination de direction en ce qui concerne le au moins un dit sous-module (102) chaque fois qu'il effectue une transition entre une dite paire de configurations ; ou
le dispositif de commande (104, 103a, 103b, 206) est configuré pour effectuer une dite opération de détermination de direction en ce qui concerne chacun desdits sous-modules (102) ; ou
le dispositif de commande (104, 103a, 103b, 206) est configuré pour effectuer une dite opération de détermination de direction par rapport à chacun desdits sous-modules (102), chaque fois qu'ils effectuent une transition entre une dite paire de configurations.

7. Convertisseur selon l'une quelconque des revendications précédentes, dans lequel le dispositif de commande (104, 103a, 103b, 206) est opérationnel pour commander au moins un ou chacun des sous-modules (102) pour les amener à effectuer une transition entre une dite paire de configurations.

8. Convertisseur selon l'une quelconque des revendications précédentes, dans lequel le dispositif de commande (104, 103a, 103b, 206) est opérationnel pour commander lorsqu'au moins un ou chacun des sous-modules (102) effectue des transitions entre une dite paire de configurations afin de commander une forme d'onde de tension formée par une différence de potentiel entre des bornes de l'appareil de convertisseur,
facultativement dans lequel le dispositif de commande (104, 103a, 103b, 206) est configuré pour commander le cadencement de chaque dite transition sur la base d'au moins une dite direction de circulation de courant déterminée de sorte que ladite forme d'onde de tension corresponde à une forme d'onde cible.

9. Convertisseur selon la revendication 7 ou 8, dans lequel le dispositif de commande (104, 103a, 103b, 206) est configuré pour commander le cadencement desdites transitions successives, chacune sur la base d'une dite direction de circulation de courant déterminée la plus récente.

10. Convertisseur selon l'une quelconque des revendications 7 à 9, dans lequel le dispositif de commande (104, 103a, 103b, 206) est configuré pour commander quels sous-modules (102) effectuent une transition sur la base d'au moins une dite direction de circulation de courant déterminée de sorte que des différences de potentiel entre les dispositifs de stockage d'énergie (202) tendent vers une différence de potentiel commune.

11. Convertisseur selon l'une quelconque des revendications 7 à 10, dans lequel le dispositif de commande (104, 103a, 103b, 206) est configuré pour commander quels sous-modules (102) effectuent une transition dans lesdites transitions successives, chacun sur la base d'une dite direction de circulation de courant déterminée la plus récente.

12. Convertisseur selon l'une quelconque des revendications 7 à 11, dans lequel le dispositif de commande (104, 103a, 103b, 206) est configuré pour commander les transitions d'un ou plusieurs desdits sous-modules (102) sur la base d'au moins une dite direction de circulation de courant déterminée sur la base d'une dite différence de potentiel mesurée par rapport à un autre dit sous-module (102).

13. Procédé de commande d'un convertisseur (100) présentant au moins un appareil de convertisseur (101a, 101b) définissant un trajet de courant à l'intérieur du convertisseur, le convertisseur comprenant une pluralité de sous-modules (102) pouvant être connectés en série pour former au moins une partie de l'appareil de convertisseur de sorte que du courant circulant le long du trajet de courant circule à travers chacun de ces sous-modules, chaque sous-module comprenant un dispositif de stockage d'énergie (202) et des circuits de commutation (201, 203, 204, 205) configurés pour diriger le courant circulant de sorte qu'il circule à travers ou contourne le dispositif de stockage d'énergie, les circuits de commutation pouvant être commandés pour amener le sous-module à effectuer une transition entre au moins une paire de configurations différentes via une configuration intermédiaire correspondante appliquée pour éviter que des commutateurs (201, 203) des circuits de commutation soient activés en même temps et court-circuitent le dispositif de stockage d'énergie (202), cette transition affectant une différence de potentiel de sorte qu'elle présente un changement associé soit lorsque le sous-module est dans la configuration intermédiaire concernée ou après qu'il ait quitté cette configuration intermédiaire en fonction d'une direction de circulation de courant le long du trajet de courant pour cette transition, le procédé étant **caractérisé en ce qu'**il comprend :
une réalisation d'une opération de détermination de direction par rapport à au moins un dit sous-module, l'opération de détermination de direction déterminant la direction de circulation de courant le long du trajet de courant pour une dite transition de ce sous-module sur la base du cadencement d'une forme d'onde de tension formée par la différence de potentiel concernée par rapport à des instructions de commutation fournies pour commander le circuits de commutation concernés pour cette transition.

Fig. 1

Fig. 2

Fig. 3a

Fig. 3b

Fig. 4

Fig. 5

(a) Positive bypass (A-B=0) ——————→ (b) Transition (A-B=+Vc) ——————→ (c) Positive output (A-B=+Vc)
(e) Positive bypass (A-B=0) ←—————— (d) Transition (A-B=+Vc) ←——————

(f) Positive bypass (A-B=0) ——————→ (g) Transition (A-B=0) ——————→ (h) Positive output (A-B=+Vc)
(k) Positive bypass (A-B=0) ←—————— (j) Transition (A-B=0) ←——————

Fig. 6a

(a) Negative bypass (A-B=0) ——————→ (b) Transition (A-B=+Vc) ——————→ (c) Positive output (A-B=+Vc)

(e) Negative bypass (A-B=0) ←—————— (d) Transition (A-B=+Vc) ←——————

(f) Negative bypass (A-B=0) ——————→ (g) Transition (A-B=0) ——————→ (h) Positive output (A-B=+Vc)

(k) Negative bypass (A-B=0) ←—————— (j) Transition (A-B=0) ←——————

Fig. 6b

(a) Positive bypass (A-B=0) ⟶ (b) Transition (A-B=0) ⟶ (c) Negative output (A-B=-Vc)
(e) Positive bypass (A-B=0) ⟵ (d) Transition (A-B=0) ⟵

(f) Positive bypass (A-B=0) ⟶ (g) Transition (A-B=-Vc) ⟶ (h) Negative output (A-B=-Vc)
(k) Positive bypass (A-B=0) ⟵ (j) Transition (A-B=-Vc) ⟵

Fig. 6c

(a) Negative bypass (A-B=0) ──────→ (b) Transition (A-B=0) ──────→(c) Negative output (A-B=-Vc)

(e) Negative bypass (A-B=0) ←────── (d) Transition (A-B=0) ←──────

(f) Negative bypass (A-B=0) ──────→ (g) Transition (A-B=-Vc) ──────→(h) Negative output (A-B=-Vc)

(k) Negative bypass (A-B=0) ←────── (j) Transition (A-B=-Vc) ←──────

Fig. 6d

(a) Positive output (A-B=+Vc) ——————→ (b) Transition (A-B=+Vc) ——————→(c) Negative output (A-B=-Vc)
(e) Positive output (A-B=+Vc) ←—————— (d) Transition (A-B=+Vc) ←——————

(f) Positive output (A-B=+Vc) ——————→ (g) Transition (A-B=-Vc) ——————→(h) Negative output (A-B=-Vc)
(k) Positive output (A-B=+Vc) ←—————— (j) Transition (A-B=-Vc) ←——————

Fig. 6e

300

Fig. 7

Fig. 8

Fig. 9